# EUROPÄISCHE PATENTSCHRIFT

(11) **EP 2 036 801 B1**
(45) Veröffentlichungstag und Bekanntmachung des Hinweises auf die Patenterteilung: **26.10.2011**
(21) Anmeldenummer: 08164193.8
(22) Anmeldetag: 11.09.2008
(51) Int. Cl.: B62B 5/00, B65D 5/44

(54) **Verpackung**
Packaging
Emballage

(30) Priorität: 12.09.2007 AT 5412007 U
(43) Veröffentlichungstag der Anmeldung: 18.03.2009
(73) Patentinhaber: Bergfreund Handels-GmbH, 5630 Bad Hofgastein (AT)
(72) Erfinder: Gracher, Kurt, 9535 Schiefling am See (AT); Hauser-Gracher, Helga, 9535 Schiefling am See (AT)
(74) Vertreter: Wirnsberger, Gernot

(56) Entgegenhaltungen:
- DE-U1- 29 921 439
- DE-U1-202005 008 804
- GB-A- 2 422 364

## Beschreibung

Die Erfindung betrifft eine Transportverpackung gemäß dem Oberbegriff des Anspruchs 1, wie sie auch von der DE 20 2005 008 804 U1 gezeigt wird.

Transportverpackungen werden für Güter verschiedenster Art eingesetzt, um deren Inhalt bei der Lagerung und/oder beim Transport zu schützen. Sind die Güter allerdings einmal verpackt, so bedarf es insbesondere bei schwerem Inhalt und/oder großer Höhe der verpackten Güter und damit auch der Verpackung in der Regel Hilfseinrichtungen oder großer körperlicher Anstrengung, um die Verpackungen mit den darin verpackten Gütern zu befördern.

Aus der DE 20 2005 008 804 U1 ist eine Transportverpackung der eingangs genannten Art bekannt geworden, bei welcher eine als Basis dienende und Rollen aufweisende Tragplatte vorgesehen ist und ein Behälter einen Bodenbereich mit Aussparungen bzw. Schlitzen aufweist, durch welche die Rollen steckbar sind, sodass die Tragplatte mit dem Behälter verbunden ist und die Rollen bodenseitig zum Verfahren der Transportverpackung vorstehen. Eine besonders stabile Verbindung von Behälter und Tragplatte scheint dabei allerdings nicht gegeben.

Aus der DE 299 21 439 U1 ist eine Transporteinrichtung bekannt geworden, die eine Bodenplatte aus einem Traggitter mit Gitterstäben und bodenseitigen Rollen aufweist, wobei ein zu befestigender Boden am Traggitter befestigbar ist, indem endseitige Laschen des Bodens durch die vom Traggitter gebildeten Aussparungen geführt werden. Der Boden weist Schlitze auf, in welche Waren mit entsprechenden Vorsprüngen einsteckbar sind. In diesem Fall ist sowohl der Boden am Traggitter als auch die Ware am Boden nicht überaus stabil befestigt.

Aufgabe der Erfindung ist es, eine Transportverpackung anzugeben, bei welcher eine stabile Fixierung des Bodens am Basiselement erreicht wird.

Diese Aufgabe wird durch eine Transportverpackung gemäß Anspruch 1 gelöst.

Ein mit der Erfindung erzielter Vorteil ist insbesondere darin zu sehen, dass die Transportverpackung auch bei schwerem Inhalt mit geringem Kraftaufwand bewegt werden kann. Darüber hinaus ist die Transportverpackung selbst nicht nur leichtgewichtig, sondern deren Behälter auch stabil am Basiselement angebracht und dennoch von diesem leicht lösbar. Sofern der Behälter infolge mehrmaligen Gebrauchs schadhaft ist, kann er daher auf einfache Weise rasch vom Basiselement getrennt und entsorgt werden. Das Basiselement kann, sofern es noch funktionstüchtig ist, weiter verwendet werden.

Um eine besonders stabile Fixierung des Behälters am Basiselement zu erreichen, weist das Basiselement Öffnungen auf und ist zumindest ein Teil der Laschen zuerst von oben durch eine der Öffnungen und dann von unten durch eine andere der Öffnungen geführt und anschließend am Basiselement etwa waagrecht angelegt, sodass der Behälter im befüllten Zustand mit seinem Boden auf die Laschen drückt und diese fixiert.

Das Basiselement, das die Roll- und/oder Gleitelemente umfasst, ist einfach und dennoch stabil ausgebildet. Zu diesem Zweck kann das Basiselement insbesondere zwei parallele Seitenelemente umfassen, die mit senkrecht zu diesen verlaufenden Stäben verbunden sind, welche die Öffnungen definieren und/oder mitdefinieren.

Das Basiselement kann zwei längere Seitenelemente und dazu normal verlaufende und die längeren Seitenelemente gegebenenfalls verbindende weitere Seitenelemente aufweisen, wobei zwischen den längeren Seitenelementen vier dieselben verbindende Stäbe angeordnet sind und wobei zwei in Draufsicht mittig angeordnete Stäbe eine erste der Öffnungen definieren und zwei endseitig angeordnete Stäbe zusammen mit den weiteren Seitenelementen weitere Öffnungen bilden. Möglich ist es auch, dass die Stäbe die kürzeren Seitenelemente miteinander verbinden.

Die am Basiselement angeordneten Roll- und/oder Gleitelemente sind bevorzugt als Räder ausgebildet und können an einem der endseitigen Stäbe angeordnet sein, der dann gleichzeitig als Radachse dient. Bei einer solchen Ausbildung ist es zweckmäßig, dass am dem endseitigen Stab gegenüberliegenden Ende der Seitenelemente zumindest ein die Höhe der Räder ausgleichender Absatz angeformt oder angebracht ist, sodass die Transportverpackung mit dem Behälter vertikal steht und durch Kippen und Ziehen bewegbar ist.

Um die Transportverpackung auf einfache Weise bewegen zu können, kann der Behälter Zuggriffe oder Ausnehmungen zum Kippen und Ziehen derselben umfassen.

Die Transportverpackung weist bevorzugt einen Behälter mit einem etwa quadratischen oder rechteckigen Querschnitt auf, wobei der Behälter zwei bodenseitig angeformte, gegenüberliegende Laschen sowie im Winkel von 90° dazu angeformte Bodenelemente umfasst, wobei die Laschen durch die Öffnungen geführt und um die Stäbe gelegt sind und die Bodenelemente auf den Laschen anliegen. Die um die Stäbe gelegten Laschen wirken Zugkräften entgegen. Die Bodenelemente hingegen wirken Druckbelastungen entgegen. In dieser Variante ist die Transportverpackung vorzüglich sowohl für ein Ziehen beim Transport als auch zum Stapeln bei der Lagerung ausgelegt.

In Bezug auf ein Gesamtgewicht und Beanspruchungen beim Gebrauch ist es günstig, wenn der Behälter aus Karton besteht, wohingegen das Basiselement im Wesentlichen aus Kunststoff besteht und beispielsweise als Spritzgussteil erstellt ist.

Bevorzugt kann auch vorgesehen sein, dass der Behälter aus einem leichtgewichtigen Kunststoff und das Basiselement im Wesentlichen aus Kunststoff besteht, wobei der leichtgewichtige Kunststoff, aus dem der Behälter besteht, insbesondere eine kleinere Dichte aufweist als der Kunststoff, aus dem das Basiselement besteht, um das Gesamtgewicht in Bezug auf ein Beanspruchungsprofil zu optimieren. Dabei kann auch vorgesehen sein, dass der Kunststoff, aus dem der Behälter besteht, ein doppelwandiger Kunststoff ist, der mit zwischen Wänden mit vorzugsweise normal zu den Wänden verlaufenden Streben versehen ist, sodass zwischen den Wänden Hohlkammern gebildet sind. Ein derartiger Kunststoff wird auch als Hohlkammer-Kunststoff bezeichnet. Dieser Kunststoff, aus dem der Behälter bestehen kann, kann ein Flächengewicht von 300 bis 3000 g/m², vorzugsweise 800 bis 1500 g/m², aufweisen und wird vor allem für eine Transportverpackung mit langer Gebrauchsdauer eingesetzt, da der Kunststoff reißfest ist, eine große Steifigkeit aufweist und auch bei Kontakt mit Wasser formstabil ist.

Weitere Merkmale, Vorteile und Wirkungen der Erfindung ergeben sich aus dem nachfolgenden Ausführungsbeispiel. Es zeigen:
Fig. 1 eine schematische Darstellung des Einführens von Laschen in ein Basiselement;
Fig. 2 eine schematische Darstellung des Ausklappens von Bodenelementen;
Fig. 3 eine Draufsicht auf ein Basiselement;
Fig. 4 einen Querschnitt eines Teils einer Transportverpackung;
Fig. 5 einen weiteren Querschnitt eines Teils einer Transportverpackung;
Fig. 6 eine stirnseitige Ansicht einer Transportverpackung.

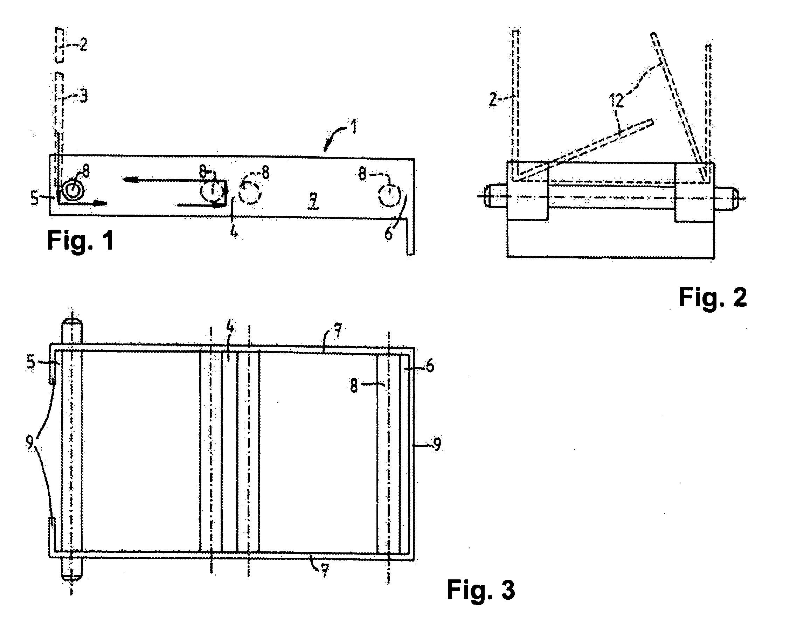

In Fig. 1 ist ein Basiselement 1 in seitlicher Ansicht dargestellt. Das Basiselement 1 umfasst, wie insbesondere auch aus Fig. 3 ersichtlich, zwei längere Seitenelemente 7 sowie zwei kürzere Seitenelemente 9, von denen eines durchgehend ausgebildet ist und die längeren Seitenelemente 7 miteinander verbindet. Des Weiteren sind die längeren Seitenelemente 7 durch vier in einer waagrechten Ebene liegende Stäbe 8 miteinander verbunden, wobei zwei Stäbe 8 etwa in der Mitte des Basiselementes 1 angeordnet sind, während sich die verbleibenden Stäbe 8 endseitig im Bereich der weiteren Seitenelemente 9 befinden. Einer der endseitigen Stäbe 8 dient gleichzeitig als Achse für nicht dargestellte Rollelemente. Die mittig angeordneten Stäbe 8 definieren eine Öffnung 4. Durch die endseitig befindlichen Stäbe 8 und die Seitenelemente 9 werden zusätzliche Öffnungen 5, 6 definiert.

Wird nun ein Behälter 2 aus einem Karton oder einem beschriebenen Hohlkammer-Kunststoff auf dem Basiselement 1 befestigt, so werden, wie in Fig. 1 durch Pfeile angedeutet, zwei an dem Behälter 2 bodenseitig angeformte Laschen 3, die einander gegenüberliegen, zuerst jeweils durch eine der Öffnungen 5, 6 geführt, danach jeweils um einen endseitigen Stab 8 und einen der mittig angeordneten Stäbe 8 gelenkt und durch die zentrale Öffnung 4 nach oben geführt, wonach die Laschen 3 um ca. 90° gebogen und am Basiselement 1 aufgelegt werden. Hierfür sollen die Laschen 3 flexibel sein, was der Fall ist, wenn der Behälter 2 mit den Laschen 3 insgesamt aus einem Karton oder Hohlkammer-Kunststoff besteht. Die Laschen 3 können stellenweise vorgeprägt sein, damit sie sich leichter um die Stäbe 8 führen lassen. Damit die in ihrer Länge entsprechend bemessenen Laschen 3 in Position bleiben, sind, wie aus Fig. 2 ersichtlich, an Seitenwänden des Behälters 2 im Winkel von 90° zu den Laschen 3 weitere Bodenelemente 12 angeformt, die nach innen geklappt werden können und dann einen Boden oder einen Teil eines Bodens des Behälters 2 bilden. Die Bodenelemente 12 können jeweils an der gegenüberliegenden Wand des Behälters 2 in Schlitze einrasten, sodass zusätzlich eine Arretierung gegeben ist.

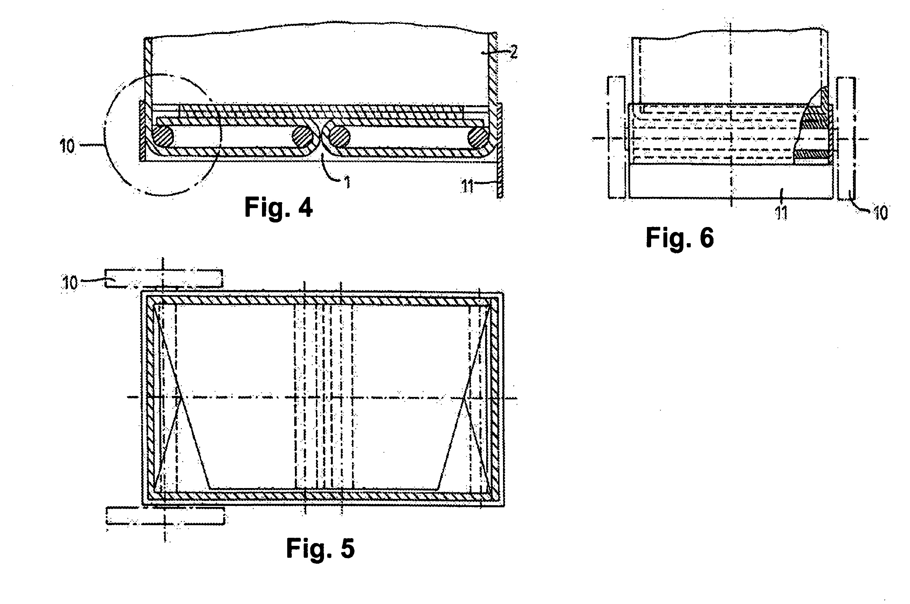

In Fig. 4 bis Fig. 6 ist ein Basiselement 1 mit einem angebrachten Behälter 2, der nur teilweise dargestellt ist, in Querschnitten bzw. einer stirnseitigen Ansicht verdeutlicht. Aus Fig. 4 ist ersichtlich, dass an einer den als Räder 10 ausgebildeten Roll- bzw. Gleitelementen gegenüberliegenden Seite des Basiselementes 1 ein Absatz 11 befestigt oder angeformt ist, welcher die Höhe der Räder 10 ausgleicht, sodass die Transportverpackung mit dem Behälter 2 senkrecht steht. Beim Ziehen der Transportverpackung wird der Behälter 2 zuerst an einem nicht gezeigten Griff gefasst und die Transportverpackung um die Radachse leicht gekippt, sodass der Absatz 11 vom Boden abhebt. Anschließend kann die Transportverpackung durch Ziehen leicht bewegt werden.

Alternativ zur erläuterten Ausführungsform des Basiselementes 1 mit Stäben 8 kann dieses auch eine Platte umfassen, in welcher den Öffnungen 4, 5, 6 entsprechende Schlitze eingearbeitet sind. Dabei versteht es sich, dass die Form der Platte ebenso wie die Form des Basiselementes 1 im dargestellten Ausführungsbeispiel der Behälterform angepasst sein kann, wobei neben einer rechteckigen Ausbildung auch andere Formen zum Einsatz kommen, z. B. runde, ovale oder sechseckige Formen.

Eine erfindungsgemäße Transportverpackung eignet sich insbesondere zum Lagern und Transportieren von Flaschen, die sich in kleineren Trageeinrichtungen befinden, welche in der Transportverpackung übereinander gestapelt und durch diese in Position gehalten werden, z. B. Trageeinrichtungen für Bierflaschen.

## Patentansprüche

1. Transportverpackung, welche ein Basiselement (1) mit Roll- und/oder Gleitelementen und einen auf diesem angeordneten Behälter (2) zum Aufnehmen von zu transportierenden Gütern umfasst, wobei der Behälter (2) im Wesentlichen aus einem leichtgewichtigen Material wie Karton oder Kunststoff besteht und bodenseitig flexible Laschen (3) aufweist, mit welchen der Behälter (2) lösbar am Basiselement (1) befestigt ist, **dadurch gekennzeichnet, dass** das Basiselement (1) Öffnungen (4, 5, 6) aufweist und zumindest ein Teil der Laschen (3) zuerst von oben durch eine der Öffnungen (4, 5, 6) und dann von unten durch eine andere der Öffnungen (4, 5, 6) geführt ist und anschließend am Basiselement (1) etwa waagrecht angelegt ist.

2. Transportverpackung nach Anspruch 1, **dadurch gekennzeichnet, dass** das Basiselement (1) zwei parallele Seitenelemente (7) umfasst, die mit senkrecht zu diesen verlaufenden Stäben (8) verbunden sind, welche die Öffnungen (4, 5, 6) definieren und/oder mitdefinieren.

3. Transportverpackung nach Anspruch 1, **dadurch gekennzeichnet, dass** das Basiselement (1) zwei längere Seitenelemente (7) und dazu normal verlaufende und die längeren Seitenelemente (7) gegebenenfalls verbindende weitere Seitenelemente (9) aufweist, wobei zwischen den längeren Seitenelementen (7) vier dieselben verbindende Stäbe (8) angeordnet sind und wobei zwei in Draufsicht mittig angeordnete Stäbe (8) eine erste der Öffnungen (4, 5, 6) definieren und zwei endseitig angeordnete Stäbe (8) zusammen mit den weiteren Seitenelementen (9) weitere Öffnungen (4, 5, 6) bilden.

4. Transportverpackung nach Anspruch 3, **dadurch gekennzeichnet, dass** an einem der endseitigen Stäbe (8) Räder (10) angeordnet sind.

5. Transportverpackung nach Anspruch 4, **dadurch gekennzeichnet, dass** am dem endseitigen Stab (8) gegenüberliegenden Ende der Seitenelemente (7) zumindest ein die Höhe der Räder (10) ausgleichender Absatz (11) angeformt oder angebracht ist, sodass die Transportverpackung mit dem Behälter (2) vertikal steht und durch Kippen und Ziehen bewegbar ist.

6. Transportverpackung nach Anspruch 5, **dadurch gekennzeichnet, dass** der Behälter (2) Zuggriffe oder Ausnehmungen zum Kippen und Ziehen der Transportverpackung umfasst.

7. Transportverpackung nach einem der Ansprüche 2 bis 6, **dadurch gekennzeichnet, dass** der Behälter (2) einen etwa quadratischen oder rechteckigen Querschnitt aufweist und zwei bodenseitig angeformte, gegenüberliegende Laschen (3) sowie im Winkel von 90° zu den Laschen (3) angeformte Bodenelemente (12) umfasst, wobei die Laschen (3) durch die Öffnungen (4, 5, 6) geführt und um die Stäbe (8) gelegt sind und die Bodenelemente (12) auf den Laschen (3) anliegen.

8. Transportverpackung nach einem der Ansprüche 1 bis 7, **dadurch gekennzeichnet, dass** der Behälter (2) aus Karton und das Basiselement (1) im Wesentlichen aus Kunststoff besteht.

9. Transportverpackung nach einem der Ansprüche 1 bis 7, **dadurch gekennzeichnet, dass** der Behälter (2) aus einem leichtgewichtigen Kunststoff und das Basiselement (1) im Wesentlichen aus Kunststoff besteht.

10. Transportverpackung nach Anspruch 9, **dadurch gekennzeichnet, dass** der leichtgewichtige Kunststoff, aus dem der Behälter (2) besteht, eine kleinere Dichte aufweist als der Kunststoff, aus dem das Basiselement (1) besteht.

11. Transportverpackung nach Anspruch 9 oder 10, **dadurch gekennzeichnet, dass** der Kunststoff, aus dem der Behälter (2) besteht, ein doppelwandiger Kunststoff ist, der mit zwischen Wänden mit vorzugsweise normal zu den Wänden verlaufenden Streben versehen ist, sodass zwischen den Wänden Hohlkammern gebildet sind.

12. Transportverpackung nach Anspruch 11, **dadurch gekennzeichnet, dass** der Kunststoff, aus dem der Behälter (2) besteht, ein Flächengewicht von 300 bis 3000 g/m², vorzugsweise 800 bis 1500 g/m², aufweist.

## Claims

1. A transportation packaging, which comprises a base element (1) with rolling and/or sliding elements and a container (2) arranged thereon for receiving goods which are to be transported, wherein the container (2) consists substantially of a lightweight material such as cardboard or plastic and has flexible lugs (3) on the base side, by which the container (2) is detachably fastened on the base element (1), **characterized in that** the base element (1) has openings (4, 5, 6) and at least a portion of the lugs (3) is guided firstly from above through one of the openings (4, 5, 6) and then from below through another of the openings (4, 5, 6) and is then applied approximately horizontally on the base element (1) .

2. The transportation packaging according to claim 1, **characterized in that** the base element (1) comprises two parallel side elements (7), which are connected with bars (8) running perpendicularly thereto, which define and/or co-define the openings (4, 5, 6).

3. The transportation packaging according to claim 1, **characterized in that** the base element (1) has two longer side elements (7) and further side elements (9), running normally thereto and connecting the longer side elements (7) if applicable, wherein between the longer side elements (7) four bars (8) are arranged, connecting the these, and wherein two bars (8), arranged centrally in top view, define a first of the openings (4, 5, 6), and two bars (8) arranged on the end side, together with the further side elements (9), form further openings (4, 5, 6).

4. The transportation packaging according to claim 3, **characterized in that** wheels (10) are arranged on one of the bars (8) on the end side.

5. The transportation packaging according to claim 4, **characterized in that** at the end of the side elements (7) lying opposite the bar (8) on the end side, at least one shoulder (11) is integrally formed or arranged, equalizing the height of the wheels (10), so that the transportation packaging stands vertically with the container (2) and is movable by tilting and pulling.

6. The transportation packaging according to claim 5, **characterized in that** the container (2) comprises pulling handles or recesses for tilting and pulling the transportation packaging.

7. The transportation packaging according to one of claims 2 to 6, **characterized in that** the container (2) has an approximately square or rectangular cross-section and comprises two lugs (3), integrally formed on the base side and lying opposite each other, and base elements (12) integrally formed at an angle of 90° to the lugs (3), wherein the lugs (3) are guided through the openings (4, 5, 6) and placed around the bars (8), and the base elements (12) lie on the lugs (3).

8. The transportation packaging according to one of claims 1 to 7, **characterized in that** the container (2) consists of cardboard and the base element (1) consists substantially of plastic.

9. The transportation packaging according to one of claims 1 to 7, **characterized in that** the container (2) consists of a lightweight plastic and the base element (1) consists substantially of plastic.

10. The transportation packaging according to claim 9, **characterized in that** the lightweight plastic of which the container (2) consists has a smaller density than the plastic of which the base element (1) consists.

11. The transportation packaging according to claim 9 or 10, **characterized in that** the plastic of which the container (2) consists is a double-walled plastic, which is provided between walls with struts preferably running normally to the walls, so that hollow chambers are formed between the walls.

12. The transportation packaging according to claim 11, **characterized in that** the plastic of which the container (2) consists has a surface weight of 300 to 3000 g/m², preferably 800 to 1500 g/m².

## Revendications

1. Emballage de transport comprenant un élément de base (1) avec des éléments roulants et/ou coulissants ainsi qu'un récipient (2) monté sur ceux-ci pour accueillir des produits à transporter, dans lequel le récipient (2) est constitué d'un matériau substantiellement léger, tel que le carton ou le plastique et comporte des pattes souples (3) côté fond, avec lesquelles le récipient (2) est fixé de façon détachable à l'élément de base (1), **caractérisé en ce que** l'élément de base (1) comporte des ouvertures (4, 5, 6) et **en ce qu'**au moins une partie des pattes (3) sont guidées d'abord par au-dessus à travers l'une des ouvertures (4, 5, 6), puis par en-dessous à travers une autre des ouvertures (4, 5, 6), pour ensuite être appliquées à peu près horizontalement sur l'élément de base (1).

2. Emballage de transport selon la revendication 1, **caractérisé en ce que** l'élément de base (1) comprend deux éléments latéraux parallèles (7) reliés à des barres (8) qui s'étendent perpendiculairement à ceux-ci et définissent et/ou co-définissent les ouvertures (4, 5, 6).

3. Emballage de transport selon la revendication 1, **caractérisé en ce que** l'élément de base (1) comporte deux éléments latéraux plus longs (7) et deux autres éléments latéraux (9) reliant les éléments latéraux plus longs (7) et s'étendant normalement par rapport à ceux-ci, dans lequel, entre les éléments latéraux plus longs (7) sont agencées quatre barres (8) reliant ceux-ci, et dans lequel deux barres (8) agencées au centre, vues d'au-dessus, définissent une première ouverture (4, 5, 6) et deux barres (8) agencées côté bord forment d'autres ouvertures (4, 5, 6) ensemble avec les autres éléments latéraux (9).

4. Emballage de transport selon la revendication 3, **caractérisé en ce que** des roues (10) sont montées sur l'une des barres (8) côté bord.

5. Emballage de transport selon la revendication 4, **caractérisé en ce qu'**à l'extrémité des éléments latéraux (7) qui est opposée à la barre (8) côté bord, il est formé ou fixé au moins un talon (11) compensant la hauteur des roues (10), de sorte que l'emballage de transport se tient verticalement avec le récipient (2) et peut être déplacé par basculement ou traction.

6. Emballage de transport selon la revendication 5, **caractérisé en ce que** le récipient (2) comprend des poignées de traction ou des évidements permettant de basculer ou de tirer l'emballage de transport.

7. Emballage de transport selon l'une des revendications 2 à 6, **caractérisé en ce que** le récipient (2) présente une section transversale quasiment carrée ou rectangulaire, et comprend deux pattes opposées (3) formées côté fond, ainsi que des éléments de fond (12) formant un angle de 90° par rapport aux pattes (3), dans lequel les pattes (3) sont guidées à travers les ouvertures (4, 5, 6) et disposées autour des barres (8), les éléments de fond (12) s'appliquant sur les pattes (3).

8. Emballage de transport selon l'une des revendications 1 à 7, **caractérisé en ce que** le récipient (2) est constitué de carton et l'élément de base (1) est constitué essentiellement de plastique.

9. Emballage de transport selon l'une des revendications 1 à 7, **caractérisé en ce que** le récipient (2) est constitué d'un plastique léger et l'élément de base (1) est constitué essentiellement de plastique.

10. Emballage de transport selon la revendication 9, **caractérisé en ce que** le plastique léger constituant le récipient (2) présente une densité inférieure à celle du plastique constituant l'élément de base (1).

11. Emballage de transport selon la revendication 9 ou 10, **caractérisé en ce que** le plastique constituant le récipient (2) est un plastique double paroi, pourvu de parois intermédiaires avec des nervures s'étendant de préférence normalement par rapport aux parois, de manière à former des espaces creux entre les parois.

12. Emballage de transport selon la revendication 11, **caractérisé en ce que** le plastique constituant le récipient (2) présente un poids surfacique de 300 à 3000 g/m², de préférence de 800 à 1500 g/m².
